# EUROPÄISCHE PATENTSCHRIFT

(11) **EP 1 433 129 B1**
(45) Veröffentlichungstag und Bekanntmachung des Hinweises auf die Patenterteilung: **21.12.2005**
(21) Anmeldenummer: 02800114.7
(22) Anmeldetag: 24.09.2002
(51) Int. Cl.: G06K 19/077

(54) **CHIPKARTE MIT DISPLAY**
CHIP CARD WITH A DISPLAY
CARTE A PUCE POURVUE D'UN AFFICHAGE

(30) Priorität: 25.09.2001 DE 10147140
(43) Veröffentlichungstag der Anmeldung: 30.06.2004
(73) Patentinhaber: Giesecke & Devrient GmbH, 81677 München (DE)
(72) Erfinder: HOHMANN, Arno, 81369 München (DE); GRAF, Hans, 83026 Rosenheim (DE)
(74) Vertreter: Klunker . Schmitt-Nilson . Hirsch
(86) Internationale Anmeldenummer: PCT/EP2002/010696
(87) Internationale Veröffentlichungsnummer: WO 2003/030096

(56) Entgegenhaltungen:
- DE-A- 19 929 912
- DE-A- 19 933 757
- DE-C- 19 963 165
- US-A- 5 081 520
- US-A- 5 742 075
- LEMME H: "ULTRAFLACHE DISPLAYS FUER CHIPKARTEN KUNSTSTOFFSUBSTRATE UND FERROELEKTRISCHE FLUESSIGKRISTALLE" ELEKTRONIK, FRANZIS VERLAG GMBH. MUNCHEN, DE, Bd. 48, Nr. 20, 5. Oktober 1999 (1999-10-05), Seiten 68,73-75, XP000927621 ISSN: 0013-5658

## Beschreibung

Die Erfindung betrifft eine Chipkarte mit Display, insbesondere eine elektronische Geldbörse im Chipkartenformat, umfassend einen Chipkartenprozessor für die Verarbeitung von Daten und einen Displaycontroller zur Ansteuerung des Displays, um bestimmte Daten auf dem Display anzuzeigen.

Eine derartige Chipkarte ist beispielsweise aus der DE 196 31 557 A1 bekannt. Das Display dient dem Zweck, ohne jegliche technische Hilfsmittel den Dateninhalt der Chipkarte, also beispielsweise das Guthaben der elektronischen Geldbörse, durch Anzeige auf dem Display ermitteln zu können. Der Displaycontroller ist aus Sicherheitsgründen als ein von dem Chipkartenprozessor separater Chip ausgebildet, kann aber auch physisch auf dem Chip des Chipkartenprozessors als logisch und funktionell separate Einheit implementiert sein.

DE 19963165 C1 offenbart die Merkmale des Obebegriffs von Anspruch 1.

Da allerdings sehr viele Anschlußleitungen vom Display zum Displaycontroller zu führen sind, bei einem fünfstelligen 7-Segment-Display insgesamt 35 Leitungen, ist eine Implementierung des Displaycontrollers auf dem Chip des Chipkartenprozessors nicht sinnvoll. Stattdessen wird üblicherweise ein separater Displaycontrollerchip ins Display integriert und auf demselben Glas- oder Kunststoffsubstrat aufgebracht, auf dem auch das Display aufgebaut ist. Das bietet sich insbesondere an, wenn das Display transparente Inidium-Zinn-Oxyd-Leiterbahnen (ITO) besitzt, so daß die Anschlußleitungen zum Displaycontroller ohne besonderen Aufwand ebenfalls als ITO-Leiterbahnen auf demselben Substrat realisiert werden können.

Der vorliegenden Erfindung liegt die Aufgabe zugrunde, den Kontaktierungsaufwand in Displaychipkarten weiter zu reduzieren.

Diese Aufgabe wird erfindungsgemäß durch eine Displaychipkarte mit den Merkmalen des unabhängigen Anspruchs 1 gelöst. In den abhängigen Ansprüchen sind vorteilhafte Ausgestaltungen der Erfindung angegeben.

Dementsprechend wird auch der Chipkartenprozessor in das Display verlegt, indem die Funktionen des Displaycontrollers und des Chipkartenprozessors in einem einzigen Chip, d.h. auf einem gemeinsamen Halbleitersubstrat, realisiert werden und dieser Chip auf demselben Substrat aufgebracht wird, auf dem auch das Display bzw. die Kontaktierungsebene des Displays aufgeracht ist.

Dadurch entfallen die Verbindungsleitungen und aufwendigen Kontaktierungen zwischen dem Displaycontrollerchip und dem Prozessorchip, der in Chipkarten bisher immer unter dem Kontaktfeld der Chipkarte liegt. Mit der Erfindung wird erreicht, daß lediglich noch fünf Anschlußleitungen zum Kontaktfeld der Karte notwendig sind. Aufgrund der großzügig dimensionierten, präzise plazierten Kontaktfeldbereiche kann diese Kontaktierung ohne viel Aufwand hergestellt werden.

Weitere Vorteile der Erfindung bestehen darin, daß nur ein Chip anstelle von zwei separaten Chips hergestellt werden müssen. Insbesondere bilden der Chip und das Display eine mechanische Einheit, die als ein einziges kompaktes Bauteil in die Karte integriert wird. Der Einbau eines separaten Prozessorchips entfällt somit.

Gemäß einer vorteilhaften Ausgestaltung der Erfindung erstreckt sich das Displaysubstrat bis unter das Kontaktfeld der Chipkarte, um den Kontaktierungsaufwand möglichst gering zu halten. Zu diesem Zweck liegt das Displaysubstrat mit dem Chipkartenprozessor oder zumindest mit zu dem Chipkartenprozessor führenden Kontaktanschlüssen unter dem Kontaktfeld der Chipkarte.

Nachfolgend wird die Erfindung beispielhaft anhand der begleitenden Zeichnungen erläutert. Darin zeigen:
- Fig. 1: eine Displaykarte in Draufsicht mit in die Karte integriertem Displaysubstrat; und
- Fig. 2: das Displaysubstrat der Karte nach Fig. 1 mit darauf angeordne- ten Bauelementen.

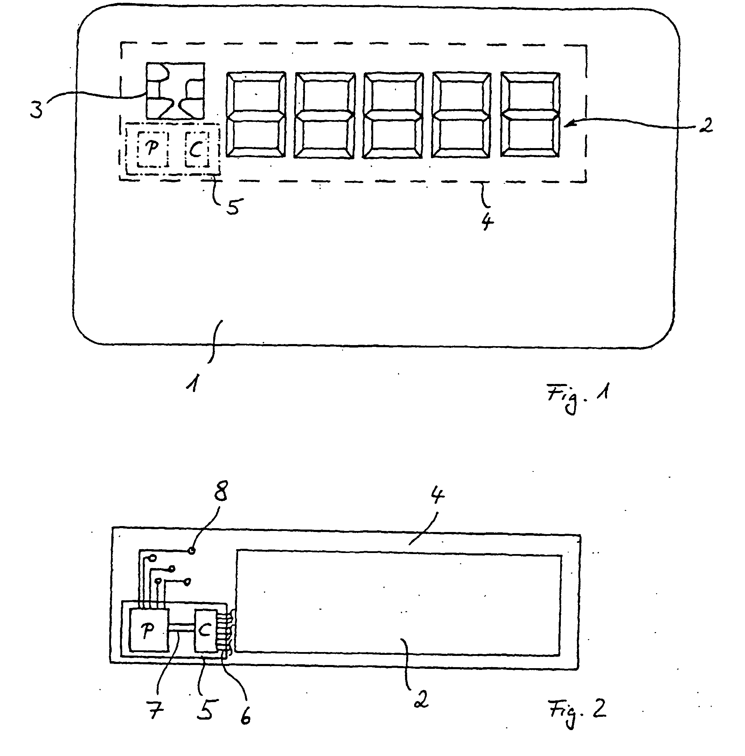

Fig.1 zeigt eine Chipkarte 1 mit einem Display 2 und einem Kontaktfeld 3 für die kontaktbehaftete Datenübertragung zwischen der Chipkarte 1 und einem Datenverarbeitungsgerät. Bei der Chipkarte handelt es sich beispielsweise um eine Karte mit Geldbörsenfunktion. Es können weitere Elemente in die Karte integriert sein, insbesondere eine Tastatur oder zumindest ein Schalter zur Aktivierung des Displays, sowie ein Unterschriftsstreifen, Magnetstreifen, Hochprägungen und dergleichen.

Das Display 2 ist in dem dargestellten Ausführungsbeispiel als fünfstelliges 7-Segment-Display ausgeführt. Grundsätzlich ist die Erfindung aber im Zusammenhang mit jeder Art von Display geeignet.

In Fig. 1 sind die im Karteninneren liegenden, erfindungsrelevanten Bauteile strichliniert dargestellt. Dabei handelt es sich zum einen um ein Displaysubstrat 4, auf dem die Strukturen und Schichten des Displays 2 aufgebaut sind und zum anderen um ein auf dem Displaysubstrat 4 appliziertes Halbleitersubstrat 5 mit einem Chipkartenprozessor P und einem Displaycontroller C.

Der Fig. 1 ist desweiteren zu entnehmen, daß sich das Displaysubstrat 4 bis unter das Kontaktfeld 3 der Chipkarte 1 erstreckt.

In Fig. 2 ist das Displaysubstrat 4 aus Fig.1 separat in Draufsicht dargestellt. Der Displaycontroller C, der Chipkartenprozessor P und dazwischenliegende Leiterbahnen 7 sind gemeinsam auf einem Halbleitersubstrat 5 realisiert, und das Halbleitersubstrat 5 ist wiederum auf dem Displaysubstrat 4 appliziert. Das Display 2 ist nicht im Detail gezeigt, da dessen Aufbau für die Erfindung von untergeordneter Bedeutung ist. Der Displaycontroller C steuert über Leiterbahnen 6 die einzelnen in Fig.1 gezeigten Segmente des Displays 2 an. Insgesamt handelt es sich um 35 Segmente und dementsprechend um 35 Leiterbahnen 6 - eine Leiterbahn zu jedem Displaysegment -, die aber in Fig. 2 der Einfachheit halber nicht alle dargestellt sind.

Der Chipkartenprozessor P ist seinerseits über Leiterbahnen mit Kontaktanschlüssen 8 verbunden, die unter dem Kontaktfeld 3 der Chipkarte 1 liegen. Eine elektrische Kontaktierung der Kontaktanschlüsse 8 mit den Kontaktbereichen des Kontaktfelds 3 ist somit in einfacher Weise möglich. Alternativ kann der Chipkartenprozessor P mit seinen Kontaktanschlüssen unmittelbar unter dem Kontaktfeld 3 angeordnet sein, was hier nicht explizit dargestellt ist. Diese Anordnung hat den Vorteil, dass das Kontaktfeld mit seinem Rahmen einen wirksamen Schutz des Halbleiters gegen Bruch bildet.

## Patentansprüche

1. Chipkarte (1) mit Display (2) umfassend einen Chipkartenprozessor (P) zur Datenverarbeitung und einen Displaycontroller (C) zur Ansteuerung des Displays (2), um bestimmte Daten auf dem Display anzeigen zu können, wobei das Display (2) auf einem Displaysubstrat (4) auf gebaut ist, **dadurch gekennzeichnet, dass** der Chipkartenprozessor (P) und der Displaycontroller (C) auf einem gemeinsamen Halbleitersubstrat (5) realisiert sind und dieses Halbleitersubstrat (5) auf dem Displaysubstrat (4) aufgebracht ist.

2. Chipkarte nach Anspruch 1, wobei sich das Displaysubstrat (4) bis unter ein Kontaktfeld (3) der Chipkarte (1) zur Datenübertragung derart erstreckt, daß vom Chipkartenprozessor (P) zum Kontaktfeld (3) führende Kontaktanschlüsse unter dem Kontaktfeld liegen.

3. Chipkarte nach Anspruch 1, wobei sich das Displaysubstrat (4) bis unter ein Kontaktfeld (3) der Chipkarte (1) zur Datenübertragung derart erstreckt, daß der Chipkartenprozessor (P) unter dem Kontaktfeld liegt.

## Claims

1. A chip card (1) with a display (2) comprising a chip card processor (P) for data processing and a display controller (C) for driving the display (2) to permit certain data to be displayed on the display, the display (2) being built up on a display substrate (4), **characterized in that** the chip card processor (P) and the display controller (C) are realized on a common semiconductor substrate (5) and said semiconductor substrate (5) is applied to the display substrate (4).

2. A chip card according to claim 1, wherein the display substrate (4) extends under a contact pad (3) of the chip card (1) for data transfer such that contact terminals leading from the chip card processor (P) to the contact pad (3) are located under the contact pad.

3. A chip card according to claim 1, wherein the display substrate (4) extends under a contact pad (3) of the chip card (1) for data transfer such that the chip card processor (P) is located under the contact pad.

## Revendications

1. Carte à puce (1) pourvue d'un affichage (2), comprenant un processeur à carte à puce (P) pour le traitement de données et un contrôleur d'affichage (C) pour commander l'affichage (2), pour afficher certaines données sur l'affichage, tandis que l'affichage est réalisé sur un substrat d'affichage, **caractérisée en ce que** le processeur à carte à puce (P) et le contrôleur d'affichage (C) sont réalisés sur un substrat semi-conducteur commun (5) et que ce substrat semi-conducteur (5) est monté sur un substrat d'affichage (4).

2. Carte à puce selon la revendication 1, dans laquelle le substrat d'affichage (4) s'étend jusque sous un banc de contacts (3) de la carte à puce (1) pour la transmission de données de telle sorte que des bornes de contact entre le processeur à carte à puce (P) et le banc de contacts (3) soient situés sous le banc de contacts.

3. Carte à puce selon la revendication 1, dans laquelle le substrat d'affichage (4) s'étend jusque sous le banc de contacts (3) de la carte à puce (1) pour la transmission de données de telle sorte que le processeur à carte à puce (P) soit situé sous le banc de contacts.
